# FASCICULE DE BREVET EUROPEEN

(11) **EP 3 839 282 B1**
(45) Date de publication et mention de la délivrance du brevet: **15.06.2022**
(21) Numéro de dépôt: 20212665.2
(22) Date de dépôt: 09.12.2020
(51) Int. Cl.: F16D 13/60, F16D 13/64

(54) **DISPOSITIF DE PROGRESSIVITE POUR DISQUE D'EMBRAYAGE A FRICTION ET DISQUE D'EMBRAYAGE A FRICTION INTEGRANT UN TEL DISPOSITIF**
PROGRESSIVITÄTSGERÄT FÜR EINE REIBKUPPLUNGSSCHEIBE UND EINE REIBUNGSKUPPLUNGSSCHEIBE, DIE EIN SOLCHES GERÄT ENTHÄLT
PROGRESSIVITY DEVICE FOR A FRICTION CLUTCH DISC, AND FRICTION CLUTCH DISC INCORPORATING SUCH A DEVICE

(30) Priorité: 19.12.2019 FR 1914976
(43) Date de publication de la demande: 23.06.2021
(73) Titulaire: VALEO EMBRAYAGES, 80009 Amiens (FR)
(72) Inventeur: DEFONTAINE, Remy, 95892 CERGY PONTOISE (FR); DAST, Pascal, 95892 CERGY PONTOISE (FR)
(74) Mandataire: Valeo Powertrain Systems

(56) Documents cités:
- EP-A1- 0 704 637
- DE-A1-102015 211 274
- FR-A1- 2 511 741
- US-A1- 2014 048 372

## Description

La présente invention se rapporte à un dispositif de progressivité pour disque d'embrayage à friction pour véhicule automobile. Le véhicule automobile peut être un véhicule dit industriel, ce dernier étant par exemple un poids lourd, un véhicule de transport en commun, ou un véhicule agricole.

Plus précisément, l'invention concerne un perfectionnement aux embrayages du type comprenant un disque d'embrayage à friction monté sur l'arbre d'entrée de la boîte de vitesses et venant en appui sur un volant moteur en position embrayée. Un mécanisme d'embrayage fixé sur le volant moteur, autrement appelé volant d'inertie, applique un effort de serrage sur le disque d'embrayage de manière à transmettre le couple produit par le moteur.

Les disques d'embrayage à friction comprennent, de façon traditionnelle, des plots de friction en forme de segments fixés sur un support, lui-même rapporté sur un voile de transmission de couple. Les plots de friction sont généralement du type métallo-céramique.

Deux rondelles de guidage disposées de part et d'autre du voile sont montées sur un moyeu central solidaire de l'arbre mené de la boîte de vitesses. Des ressorts hélicoïdaux de compression sont disposés circonférentiellement entre les rondelles de guidage et le voile de transmission de couple. La transmission du couple et la filtration des acyclismes moteur se fait par compression et relâchement successifs des ressorts.

Lors de la phase de ré-embrayage, il est nécessaire que la transmission du couple soit la plus progressive possible. Le mécanisme d'embrayage vient alors appliquer un effort axial de compression croissant sur le dispositif de progressivité jusqu'à la transmission complète du couple moteur. [Un tel dispositif de progressivité est décrit, par exemple, dans DE 102015211274 A1.1

Il existe déjà des dispositifs de progressivité comprenant des plots de friction en forme de segments tels que celui décrit, notamment, dans la demande de brevet EP3036451A1.

Ce document divulgue un disque d'embrayage à friction comprenant notamment un amortisseur de vibration torsionnelle et un dispositif de progressivité. Le dispositif de progressivité est formé par des plots de friction en forme de segment et fixés sur des pales de progressivité associées deux par deux, chacune des pales de progressivité étant rapportée sur la périphérie d'un voile de transmission de couple.

La progressivité du dispositif est assurée par l'empilement axial de deux pales, l'une servant de support et l'autre ayant un pli se déformant radialement lorsque le mécanisme d'embrayage est fermé. Les deux faces de frottement du disque d'embrayage à friction sont morcelées. En fonction du nombre de plots fixés sur le voile de transmission de couple, l'usure des faces de frottement peut être rapide et nuire à la durabilité générale du disque d'embrayage à friction. Cette configuration de face de frottement morcelée n'est donc pas satisfaisante.

Egalement, pendant la phase de ré-embrayage, les plots de friction en forme de segments sont fortement sollicitées et ont tendance à se déformer de manière non contrôlée en créant alors des discontinuités dans la transmission du couple qui s'accompagnent d'un phénomène de broutement avec des à-coups très inconfortables et préjudiciables à la conduite du véhicule.

Les inconvénients associés à ce dispositif de progressivité sont liés au nombre restreint de plots de friction et à l'absence de moyen de retenue des pales de progressivité lors des phases de débrayage. Dans cette phase, le mécanisme d'embrayage n'applique plus de charge sur les plots de friction. L'extrémité de la pale de progressivité se déforme de manière non contrôlée, ce qui génère des défauts géométriques. Le confort du véhicule lors des phases de ré-embrayage est par conséquent dégradé.

Le nombre de plis disponibles sur les pales de progressivité est également limité de sorte que la raideur globale du dispositif de progressivité est élevée. Le confort du véhicule est aussi dégradé.

L'invention vise à remédier à ces problèmes techniques en proposant un dispositif de progressivité perfectionné avec des pales de progressivité dont la déformation est maîtrisée en supprimant ou tout au moins en limitant fortement les risques de faux parallélisme des plots de friction lors des phases de ré-embrayage.

Dans ce but, l'invention propose un dispositif de progressivité pour un disque d'embrayage à friction, comprenant :
un voile de support à axe central de rotation X dans lequel une partie centrale annulaire est adaptée à coopérer avec un amortisseur de vibration torsionnelle et
une partie externe porte des pales de progressivité et des plots de friction rapportés sur les pales de progressivité,
dans lequel les pales de progressivité s'étendent circonférentiellement sur au moins une des faces du voile de support, chaque pale de progressivité comprend une extrémité fixée sur la partie externe, une autre extrémité libre et des plis délimitant une zone de support pour le plot de friction, le plot de friction associé à cette pale de progressivité recouvrant l'extrémité fixée sur le voile de support,
le dispositif de progressivité étant reconnaissable en ce que chaque pale de progressivité comprend au moins deux plis de matière délimitant la zone de support du plot de friction,
le pli de matière situé entre l'extrémité fixée et la zone de support du plot de friction s'étend selon une direction sensiblement radiale, les autres plis de matière de la pale de progressivité étant répartis circonférentiellement au-delà de la zone de support et à l'opposé de l'extrémité fixée.

Ce dispositif de progressivité, selon l'invention, présente l'avantage, grâce au recouvrement de l'extrémité fixée sur le voile de support par le plot de friction d'augmenter la surface des faces de frottement du disque d'embrayage à friction et donc d'améliorer sa durabilité. Le rapprochement des plots de friction permet également d'augmenter le nombre de plis sur les pales de progressivité et donc d'améliorer le confort du véhicule lors de la phase de ré-embrayage.

Avantageusement, la zone de support de chaque pale de progressivité peut être décalée axialement par rapport à l'extrémité fixée, l'extrémité fixée de ladite pale de progressivité étant en appui sur la face du voile de support. De cette manière, la zone de support des plots de friction est disposée au plus près de la zone de fixation des pales de progressivité et les défauts géométriques au niveau de la face de friction des plots sont réduits. De préférence, la zone de support est plane.

L'invention peut présenter l'une ou l'autre des caractéristiques décrites ci-dessous combinées entre elles ou prises indépendamment les unes des autres :
- le plot de friction peut avoir une forme de segment angulaire ;
- le plot de friction peut être rapporté directement sur la zone de support ;
- le plot de friction peut être formé en matériau métallo-céramique, ou en fritté, ou en matériau organique ;
- le nombre de plots de friction par face de frottement peut être compris entre 3 et 15;
- les plots de friction peuvent être fixés par des rivets d'assemblage ou par soudure sur les pales de progressivité ;
- le plot de friction peut être collé sur un clinquant intercalaire ;
- la zone de support peut comprendre des orifices aptes à accueillir des rivets d'assemblage des plots de friction sur les pales de progressivité ;
- la zone de support peut être délimitée par deux plis parallèles ;
- les plis d'une même pale de progressivité peuvent être parallèles entre eux et avoir une même raideur axiale.
- les plis peuvent avoir une même largeur et même hauteur et s'étendre de façon symétrique de part et d'autre de l'axe diamétral du voile de support.
- le voile de support peut présenter des échancrures dans les secteurs angulaires situés sous la zone de support des pales de progressivité, de sorte que l'inertie du dispositif de progressivité soit améliorée.
- la pale de progressivité peut être réalisée en tôle d'acier, les plis étant perpendiculaires au sens de laminage de la tôle.
- la pale de progressivité peut comprendre au moins deux plis de matière délimitant la zone de support du plot de friction, les plis s'étendant dans une direction orthoradiale par rapport à l'axe central du voile de support de telle sorte que, sous contraintes d'appui, les plis s'écrasent de façon isostatique.
- l'extrémité fixée de la pale de progressivité peut être retenue sur le voile de support par deux rivets répartis le long du pli de matière situé entre l'extrémité fixée et la zone de support du plot de friction.

Selon une variante de l'invention, des plots de friction peuvent être fixés directement sur une des faces du voile de support, en vis-à-vis de pales de progressivité disposées sur l'autre face. Cette variante de l'invention présente l'avantage de disposer la progressivité sur le côté du disque d'embrayage à friction en contact avec le mécanisme d'embrayage.

Selon une autre variante de l'invention, les pales de progressivité peuvent s'étendre circonférentiellement sur les deux faces du voile de support, les pales de progressivité étant disposées axialement en regard l'une de l'autre, de part et d'autre de la partie externe. Cette autre variante de l'invention présente l'avantage d'améliorer la tenue mécanique et d'abaisser la raideur globale du dispositif de progressivité étant donné que le nombre de plis est augmenté.

L'invention a également pour objet, selon un autre de ses aspects, un dispositif de progressivité reprenant tout ou partie des caractéristiques mentionnées précédemment et dans lequel le voile de support comprend un moyen de retenue passant au travers de l'extrémité libre de chaque pale de progressivité.

Ce dispositif de progressivité, selon cet aspect de l'invention, présente l'avantage, grâce au moyen de retenue disposé sur le voile de support de réduire les défauts géométriques au niveau de la face de friction des plots.

Avantageusement, l'extrémité libre de chaque pale de progressivité peut être retenue axialement par rapport au voile de support par l'intermédiaire du moyen de retenue lorsque le dispositif de progressivité est libéré de tout effort axial de compression. De cette manière, les défauts géométriques au niveau de la face de friction des plots sont réduits, ce qui contribue à améliorer le confort du véhicule lors de la phase de ré-embrayage.

De préférence, le moyen de retenue peut comprendre au moins un rivet à tête épaulée fixé sur le voile de support et introduit dans un orifice aménagé sur l'extrémité libre de chaque pale de progressivité, une partie de l'extrémité libre étant apte à s'appuyer sur la tête épaulée du rivet.

Alternativement, le moyen de retenue peut comprendre une patte pliée issue de matière avec le voile de support et introduite dans un orifice aménagé sur l'extrémité libre de chaque pale de progressivité, une partie de l'extrémité libre étant apte à s'appuyer sur la patte pliée.

L'invention a également pour objet, selon un autre de ses aspects, un dispositif de progressivité reprenant tout ou partie des caractéristiques mentionnées précédemment et dans lequel l'extrémité libre de chaque pale de progressivité peut être retenue au moins partiellement axialement par rapport au voile de support par l'intermédiaire de l'extrémité fixée de la pale de progressivité adjacente lorsque le dispositif de progressivité est libéré de tout effort axial de compression.

Ce dispositif de progressivité, selon cet aspect de l'invention, présente l'avantage, grâce à la retenue de l'extrémité libre de la pale de progressivité de réduire les défauts géométriques au niveau de la face de friction des plots.

Avantageusement, une partie de l'extrémité libre de chaque pale de progressivité peut être insérée dans un trou de dégagement formé dans le voile de support et recouverte au moins partiellement par l'extrémité fixée de la pale de progressivité adjacente, ce qui contribue à réduire l'encombrement axial du dispositif de progressivité.

L'invention a également pour objet, selon un autre de ses aspects, un dispositif de progressivité reprenant tout ou partie des caractéristiques mentionnées précédemment et dans lequel chaque plot de friction est en appui axial avec le plot de friction adjacent circonférentiellement.

Ce dispositif de progressivité, selon cet aspect de l'invention, présente l'avantage, grâce à la mise en appui des plots de friction entre eux de réduire les défauts géométriques au niveau de la face de friction des plots. La superficie totale des pales de progressivité est désormais dédiée à la formation de zones de pliage qui peuvent être optimisées en terme de résistance mécanique.

Avantageusement, chaque plot de friction peut comprendre un clinquant intercalaire, le clinquant intercalaire étant en appui axial sur le clinquant intercalaire du plot de friction adjacent lorsque le dispositif de progressivité est libéré de tout effort axial de compression.

De préférence, le clinquant intercalaire peut comprendre une languette d'appui orientée angulairement en direction de l'extrémité libre de chaque pale de progressivité, ladite languette d'appui venant en appui directement sur le clinquant intercalaire du plot de friction adjacent.

Avantageusement, la languette d'appui est obtenue par pliage et/ou emboutissage du clinquant intercalaire.

Alternativement, chaque plot de friction peut comprend un clinquant intercalaire, deux clinquants intercalaires adjacents circonférentiellement étant liés entre eux par une liaison tenon-mortaise et en appui axial l'un sur l'autre par l'intermédiaire d'au moins un rivet additionnel.

Selon cette alternative, le clinquant intercalaire associé au plot de friction ayant une forme de segment angulaire peut présenter un profil dissymétrique au niveau des faces latérales. Sur une des faces latérales, le clinquant intercalaire peut présenter une excroissance formant le tenon et sur l'autre face latérale le clinquant intercalaire peut présenter une cavité formant la mortaise.

L'invention a également pour objet, selon un autre de ses aspects, un disque d'embrayage à friction pour véhicule automobile, comprenant un voile de transmission de couple, deux rondelles de guidage disposées de part et d'autre dudit voile de transmission de couple, des ressorts hélicoïdaux de compression en appui sur le voile de transmission de couple et les rondelles de guidage, et un dispositif de progressivité reprenant tout ou partie des caractéristiques mentionnées précédemment, dans lequel le voile de support est porté soit par le voile de transmission de couple, soit par l'une des deux rondelles de guidage.

Le voile de support peut comprendre des échancrures ou des fenêtres entourant les ressorts hélicoïdaux de compression.

Le voile de support peut comprendre des échancrures découpées sur le pourtour extérieur de la partie externe.

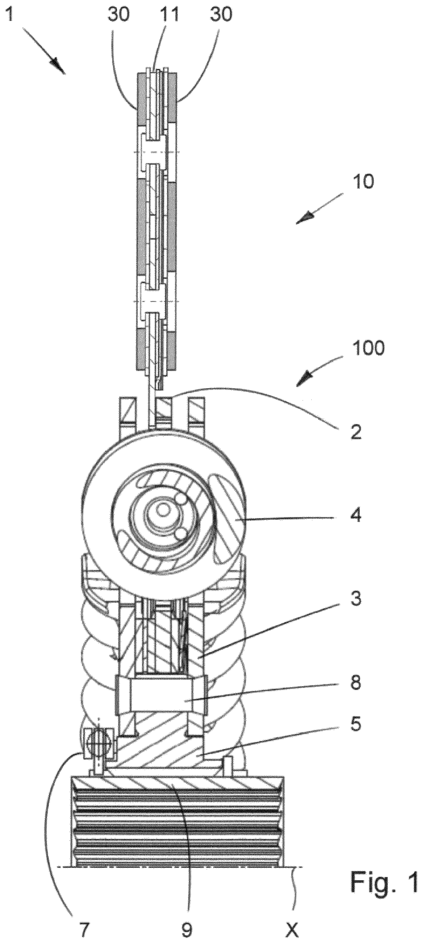

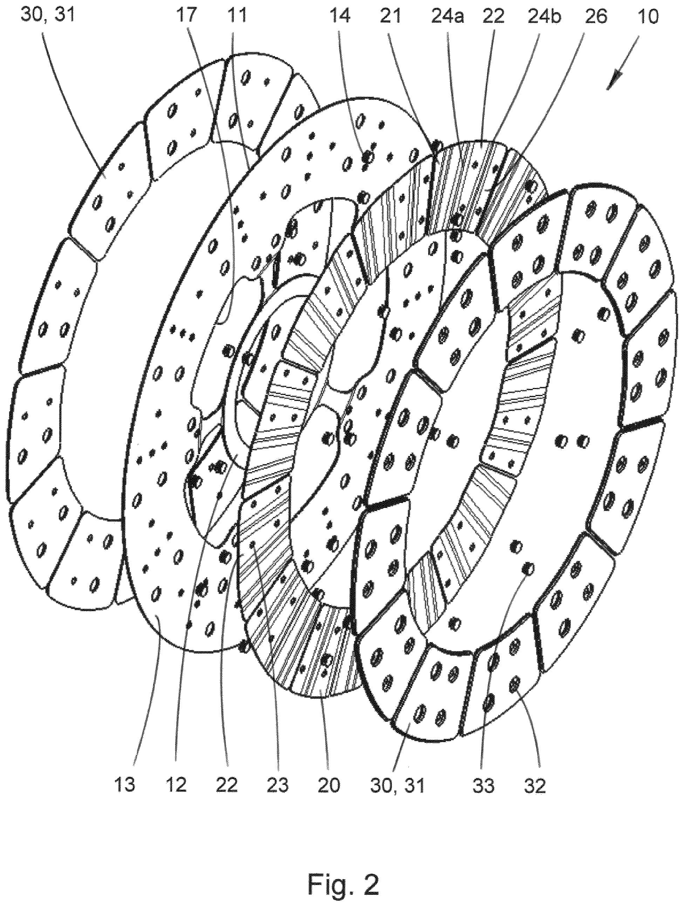

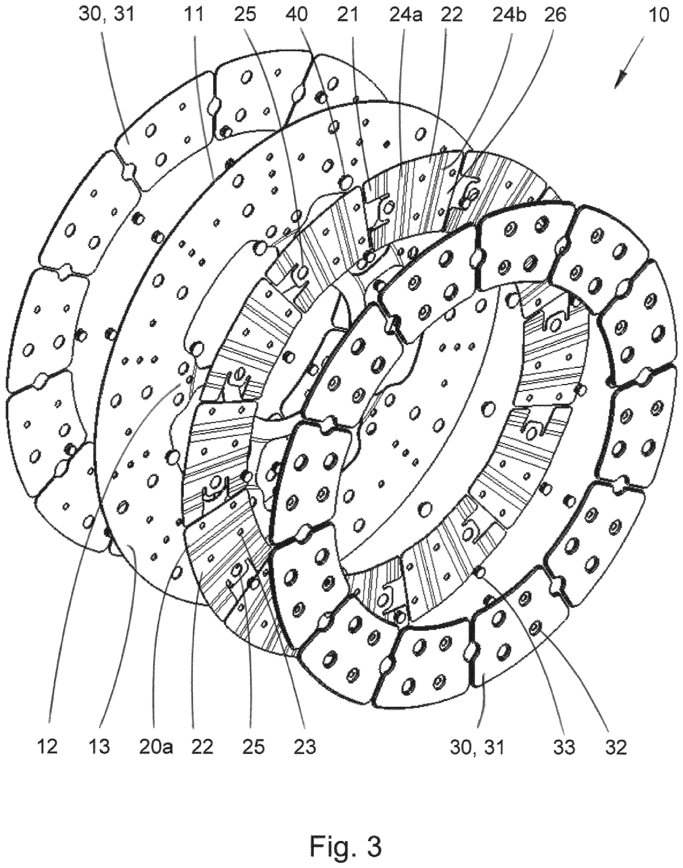

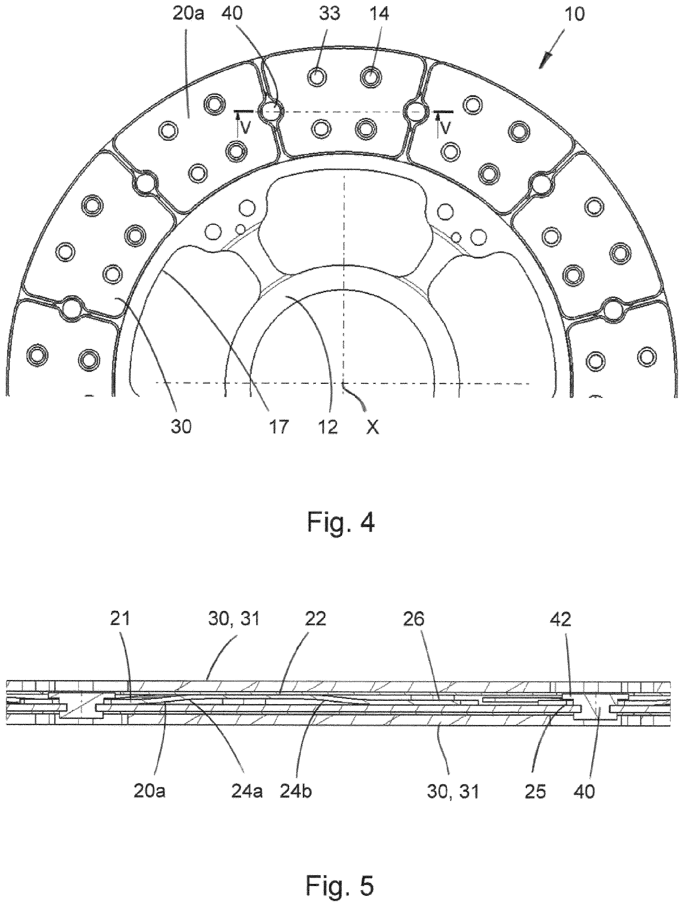

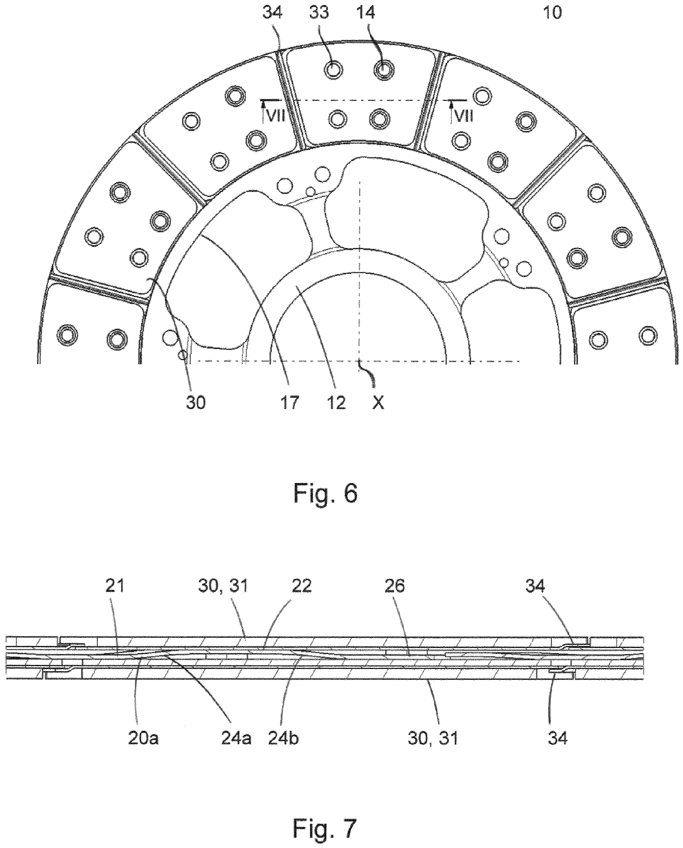

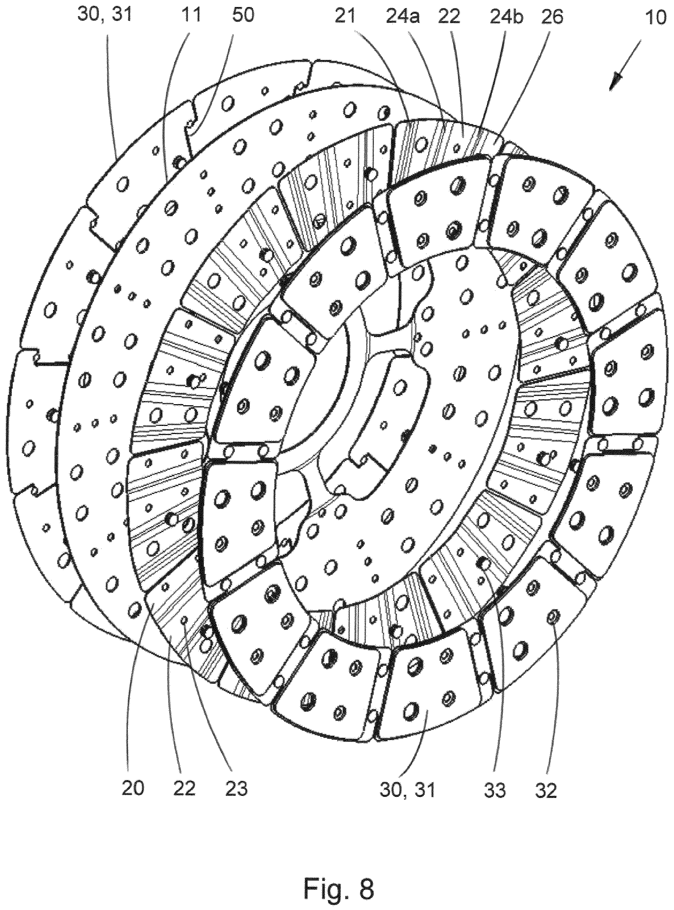

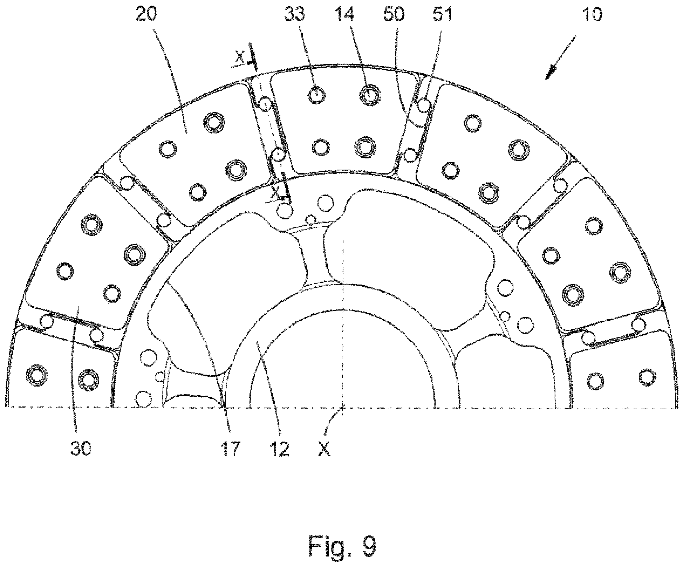

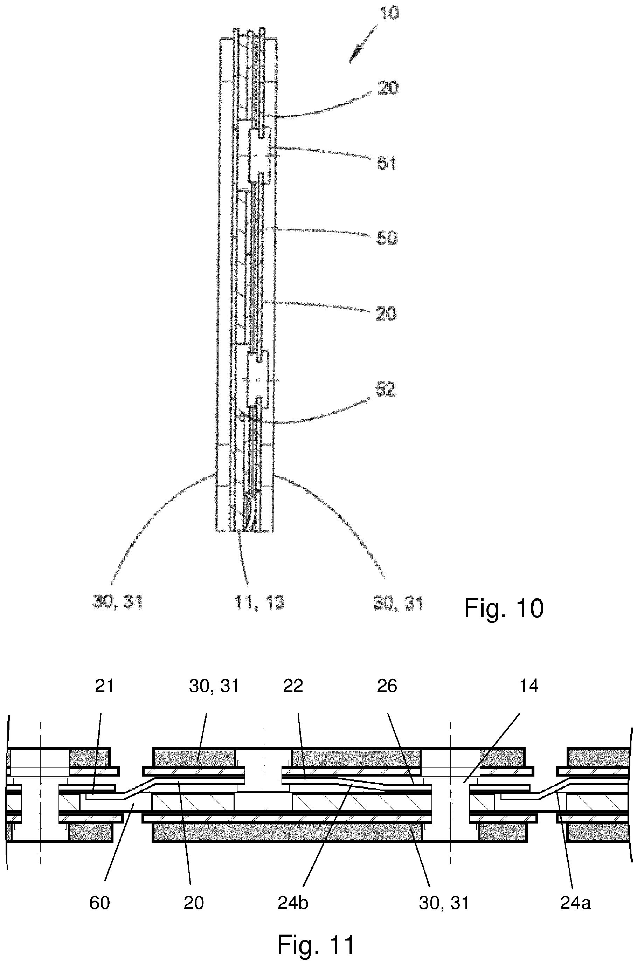

L'invention sera mieux comprise à la lecture de la description qui va suivre, donnée uniquement à titre d'exemple et faite en se référant aux dessins annexés dans lesquels :
- la figure [Fig. 1] est une vue en coupe d'un disque d'embrayage à friction intégrant un dispositif de progressivité selon un premier mode de mise en œuvre de l'invention;
- la figure [Fig. 2] est une vue isométrique explosée du dispositif de progressivité selon le premier mode de mise en œuvre de l'invention de la figure 1 ;
- la figure [Fig. 3] est une vue isométrique explosée d'un dispositif de progressivité selon un deuxième mode de mise en œuvre de l'invention ;
- la figure [Fig. 4] est une vue de face du dispositif de progressivité selon le deuxième mode de mise en œuvre de l'invention de l'invention de la figure 3 ;
- la figure [Fig. 5] est une vue en coupe partielle du dispositif de progressivité selon le deuxième mode de mise en œuvre de l'invention de la figure 3 ;
- la figure [Fig. 6] est une vue de face d'un dispositif de progressivité selon un troisième mode de mise en œuvre de l'invention de l'invention ;
- la figure [Fig. 7] est une vue en coupe du dispositif de progressivité selon le troisième mode de mise en œuvre de l'invention de l'invention de la figure 6;
- la figure [Fig. 8] est une vue isométrique explosée d'un dispositif de progressivité selon un quatrième mode de mise de mise en œuvre de l'invention ;
- la figure [Fig. 9] est une vue de face du dispositif de progressivité selon le quatrième mode de mise en œuvre de l'invention de la figure 8 ;
- la figure [Fig. 10] est une vue en coupe du dispositif de progressivité selon le quatrième mode de mise en œuvre de l'invention de la figure 8 ;
- la figure [Fig. 11] est une vue en coupe d'un dispositif de progressivité selon un cinquième mode de mise de mise en œuvre de l'invention ;

Dans la suite de la description et des revendications, on utilisera à titre non limitatif et afin d'en faciliter la compréhension, les termes « avant » ou « arrière » selon la direction par rapport à une orientation axiale déterminée par l'axe O principal de rotation de la transmission du véhicule automobile et les termes « intérieur / interne » ou « extérieur / externe » par rapport à l'axe O et suivant une orientation radiale, orthogonale à ladite orientation axiale.

Les figures 1 et 2 illustrent un premier mode de mise en œuvre d'un disque d'embrayage à friction 1 intégrant le dispositif de progressivité 10 selon l'invention.

Le disque d'embrayage à friction 1 d'axe de rotation X comprend un dispositif d'amortissement vibratoire 100 dans lequel on retrouve de manière traditionnelle un voile de transmission de couple 2, des éléments de guidage 3 et des ressorts hélicoïdaux de compression 4. Les parties coaxiales 2 et 3 sont montées rotatives l'une par rapport à l'autre à l'encontre des ressorts hélicoïdaux de compression 4. Le disque d'embrayage à friction illustre dans le cas présent une architecture dites « symétrique » et comprend un voile de support 11 rapporté sur le voile de transmission de couple 2. Le voile de support 11 est équipé de plots de friction 30 répartis sur la périphérie du voile de transmission de couple 2 selon l'axe X et aptes à frotter sur un plateau de pression d'un mécanisme d'embrayage. Les deux éléments de guidage 3, autrement appelés rondelles de guidage 3, sont disposées de part et d'autre du voile de transmission de couple 2 en emprisonnant dans des logements intercalaires les ressorts hélicoïdaux de compression 4.

Un mécanisme d'embrayage fixé sur le volant moteur (non représenté) applique un effort de serrage sur le disque d'embrayage à friction 1 de manière à transmettre le couple produit par le moteur en direction de la boîte de vitesses.

Le couple moteur entre dans le disque d'embrayage à friction par l'intermédiaire du voile de support 11 et ressort par l'intermédiaire d'un moyen central 5 disposé entre les deux rondelles de guidage 3. Le moyeu central 5 est raccordé aux rondelles de guidage 3 par des rivets 8. Le moyeu central 5 est en prise avec un pré-amortisseur 7, notamment par l'intermédiaire d'un corps de moyeu 9. Le corps de moyeu 9 est monté sur l'arbre mené de la boîte de vitesse (non représenté) et transmet le couple moteur par des cannelures formées sur son alésage intérieur.

En variante non représentée, le disque d'embrayage à friction peut présenter une architecture dites « dissymétrique » dans laquelle le voile de support 11 est fixé directement sur une des rondelles de guidage 3.

Comme illustré sur les figures 1 et 2, le dispositif de progressivité 10 comprend selon le premier mode de mise en œuvre de l'invention un voile de support 11 d'axe de rotation central X porté par le voile de transmission de couple 2, des pales de progressivité 20 et des plots de friction 30 répartis angulairement autour de l'axe X.

Le voile de support 11 comprend une partie centrale 12 annulaire adaptée à coopérer avec l'amortisseur de vibration torsionnelle 100 et une partie externe 13 portant les pales de progressivité 20. Les pales de progressivité 20 sont rapportées et s'étendent circonférentiellement autour du voile de support 11. Chacune des pales de progressivité est fixée sur la partie externe 13 du voile de support 11 à l'aide de rivets de fixation 14.

Dans le premier mode de mise en œuvre de l'invention, des plots de friction 30 sont fixés directement sur une des faces du voile de support 11 et des pales de progressivité 20 sont fixées sur l'autre face du voile de support 11. Les plots de friction 30 des deux faces de frottement du dispositif de progressivité 10 sont disposés en vis-à-vis angulairement.

Le moyen de fixation 14 des pales de progressivité peut être au moins un rivet reliant l'extrémité des pales de progressivité 20 et le voile de support 11 mais pourrait être également une liaison par soudure ou par collage.

Le voile de support 11 comprend des ouvertures 17 ou des échancrures qui entourent les ressorts hélicoïdaux de compression 4. Les ouvertures 17 ou les échancrures sont formées sur la partie centrale 12. Le voile de support 11 est fixé sur le voile de transmission de couple 2 à l'aide de rivets (non représentés) disposées angulairement entre les ouvertures 17.

Les plots de friction 30 ont une forme de segment angulaire et couvrent totalement les faces de frottement du disque d'embrayage à friction 1. Dans cet exemple, chacune des faces de frottement est formée par douze plots de friction 30 séparés. Afin d'augmenter la durabilité de l'embrayage, le plot de friction 30 est formé en matériau métallo-céramique. Cependant, le plot de friction pourrait être également formé en fritté, en céramique ou encore dans un matériau organique. Le plot de friction 30 est collé sur un clinquant intercalaire 31 pour des raisons de tenues mécaniques. Le plot de friction est dans cet exemple un sous-ensemble formé de deux couches de matériau distincts, le clinquant intercalaire 31 étant réalisé généralement en acier.

Comme illustré sur la figure 2, les plots de friction 30 adaptés à coopérer avec la face de friction du plateau de pression du mécanisme d'embrayage sont rivetés sur les pales de progressivité 20.

Le clinquant intercalaire 31 et le plot de friction 30 comprennent des trous 32 de passage de rivets d'assemblage 33 du plot sur la pale de progressivité 20.

Chacune des pales de progressivité comprend une zone de support 22 du plot de friction 30 décalée axialement par rapport à la partie centrale 12 du voile de support 11. La zone de support 22 est sensiblement plane et comprend notamment des orifices 23 aptes à accueillir les rivets d'assemblage 33.

Dans le mode de mise en œuvre illustré par les figures 1 et 2, les pales de progressivité 20 sont solidarisées et fixées sur le voile de support 11 au niveau d'une de leurs extrémités 26 au moyen d'une série de rivets de fixation 14 alignés selon un axe passant par l'axe de rotation X. Les rivets de fixation 14 solidarisent également les plots de friction situés sur l'autre face de frottement.

La pale de progressivité 20 a une forme générale d'arc de cercle avec un profil externe arrondi et confondu avec le diamètre extérieur du voile de support 11. La pale de progressivité 20 comprend également une extrémité 26 fixée sur la partie externe 13 du voile de support 11 et une extrémité libre 21. L'extrémité 26 fixée sur le voile de support 11 est plane et vient reposer sur la partie externe 13.

Afin d'agrandir la face de frottement du disque d'embrayage à friction 1, le plot de friction 30 associé à la pale de progressivité 20 recouvre l'extrémité 26 fixée sur le voile de support 11. La face de frottement est sensiblement continue sur 360°.

Des plis 24a, 24b issus de matière avec la pale de progressivité 20 délimitent la zone de support 22 agencée pour recevoir le plot de friction 30. La zone de support 22 du plot de friction 30 est décalée axialement par rapport à l'extrémité 26 fixée de la pale de progressivité.

Une fois les pales de progressivité 20 rivetées au voile de support 11, la zone de support 22 se trouve surélevée de la hauteur des plis 24a, 24b par rapport au plan du voile de support 11 formé par la partie externe 13. La raideur globale du dispositif de progressivité 10 est améliorée en raison de la présence d'un grand nombre de plis.

Selon une variante de l'invention, les plis 24a, 24b peuvent avoir une même largeur et même hauteur et s'étendent de façon symétrique de part et d'autre de l'axe diamétral du voile de support. Les deux plis 24a, 24b forment des cambrages identiques. Les plis sont inclinés avec un angle compris entre 1° et 20° par rapport au plan perpendiculaire à l'axe central X. L'inclinaison des plis assure une élévation comprise entre 0,5 et 1,5 mm et de préférence de 0,9 mm de la zone de support 22 par rapport au voile de support 11.

En conséquence, lors de la phase de ré-embrayage, lorsqu'au moins l'une des faces de frottement se trouve soumise à des contraintes d'appui, celles-ci sont transmises à la zone de support 22 et aux plis 24a, 24b qui se déforment alors de façon contrôlée.

Plus précisément, les deux plis s'écrasent dans le même sens, de manière identique et simultanée sur toutes les pales 20, à la manière de charnières, en provoquant un décalage angulaire tangentiel des plots de friction dont les faces de friction restent toutefois dans des plans parallèles, comme illustré par la figure 1.

Cette déformation sélective des plis 24a, 24b de la zone de support 22 permet un pivotement libre des plots de friction 30 de la face de frottement orientée en direction du mécanisme d'embrayage autour de l'axe de rotation X relativement à la face de frottement orientée en direction du volant d'inertie. Les plots de friction restent ainsi dans un plan perpendiculaire à l'axe X.

On va maintenant décrire en référence aux figures 3, 4 et 5, un disque d'embrayage à friction 1 intégrant le dispositif de progressivité 10 selon un deuxième mode de mise en œuvre de l'invention dans lequel le voile de support 11 comprend un moyen de retenue 40 passant au travers de l'extrémité libre 21 de la pale de progressivité 20a.

Le moyen de retenue 40 comprend notamment un rivet 40 à tête épaulée 42 fixé sur le voile de support 11 et introduit dans un orifice 25 aménagé sur l'extrémité libre 21 de la pale de progressivité 20a. Lorsque le dispositif de progressivité est libéré de tout effort axial de compression, une partie de l'extrémité libre 21 est en appui sur la tête épaulée 42 du rivet 40. L'extrémité libre 21 de la pale de progressivité 20a est retenue axialement par rapport au voile de support 11 par l'intermédiaire du moyen de retenue 40, ce qui réduit les défauts géométriques au niveau de la face de friction des plots.

Selon ce deuxième mode de mise en œuvre de l'invention, chaque extrémité 21 de pale de progressivité 20a est traversée par un rivet 40. Les rivets 40 sont répartis angulairement autour de l'axe X et fixés sur la partie externe 13 du voile de support 11.

La hauteur de l'épaulement du rivet 40 est légèrement supérieure à l'épaisseur de la pale de progressivité 20a de manière à faciliter le coulissement de celle-ci lors de la phase de ré-embrayage.

L'extrémité 21 de la pale de progressivité 20a peut comprendre également des pattes pliées additionnelles ayant pour but d'améliorer la raideur globale du dispositif de progressivité 10.

L'orifice 25 formé au niveau de l'extrémité 21 de la pale de progressivité 20a est circulaire et garantit un jeu fonctionnel entre le rivet 40 et la pale de progressivité 20a de manière à faciliter le coulissement de celle-ci lors de la phase de ré-embrayage. En variante, l'orifice 25 peut avoir une forme oblongue.

Selon une variante non représentée, le moyen de retenue 40 peut comprendre une patte pliée issue de matière avec le voile de support et introduite dans un orifice aménagé sur l'extrémité libre de la pale de progressivité, une partie de l'extrémité libre étant apte à s'appuyer sur la patte pliée. Les pattes pliées sont réparties angulairement autour de l'axe X et disposées sur la partie externe 13 du voile de support 11.

On va maintenant décrire en référence aux figures 6 et 7, un disque d'embrayage à friction 1 intégrant le dispositif de progressivité 10 selon un troisième mode de mise en œuvre de l'invention dans lequel chaque plot de friction est en appui axial avec le plot de friction adjacent, notamment lorsque le dispositif de progressivité est libéré de tout effort axial de compression.

Dans ce troisième mode, chaque plot de friction 30 est collé sur un clinquant intercalaire 31 et le clinquant intercalaire 31 est agencé pour venir en appui axial sur le clinquant intercalaire du plot de friction adjacent lorsque le dispositif de progressivité est libéré de tout effort axial de compression.

Notamment, le clinquant intercalaire 31 comprend une languette d'appui 34 orientée angulairement en direction de l'extrémité libre 21 de la pale de progressivité 20, et la languette d'appui 34 recouvre le clinquant intercalaire 31 du plot de friction 30 adjacent.

Lorsque le disque d'embrayage à friction n'est plus soumis à la charge du mécanisme d'embrayage, la zone de support 22 de la pale de progressivité 20 s'écarte axialement par rapport au voile de support. En l'absence de moyens de retenue, la pale de progressivité 20 a tendance à se déformer de manière désordonnée et l'extrémité du plot de friction 30 située du côté de l'extrémité libre 21 de la pale de progressivité 20 se soulève axialement d'avantage que l'autre extrémité du plot de friction 30 située du côté de l'extrémité 26 fixée sur le voile de support 11. La languette d'appui 34 orientée angulairement en direction de l'extrémité libre 21 vient donc retenir axialement le clinquant intercalaire 31 du plot de friction 30 adjacent, ce qui réduit les défauts géométriques au niveau de la face de friction des plots.

Par rapport au deuxième mode de mise en œuvre de l'invention, ce troisième mode présente l'avantage de simplifier l'assemblage du dispositif de progressivité étant donné l'absence de rivet 40 à tête épaulé 42.

On va maintenant décrire en référence aux figures 8, 9 et 10, un disque d'embrayage à friction 1 intégrant le dispositif de progressivité 10 selon un quatrième mode de mise en œuvre de l'invention dans lequel deux clinquants intercalaires adjacents circonférentiellement sont liés entre eux par une liaison 50 du type « tenon-mortaise ».

Le plot de friction 30 a une forme de segment angulaire. Cependant, le clinquant intercalaire 31 associé présente un profil dissymétrique au niveau des faces latérales. Sur une des faces latérales, le clinquant intercalaire présente une excroissance formant le tenon et sur l'autre face latérale le clinquant intercalaire présente une cavité formant la mortaise.

Les clinquant intercalaires 31 d'une même face de frottement peuvent être insérés axialement les uns dans les autres et former une couronne continue sur 360°. Lorsque le disque d'embrayage à friction 1 est soumis à une grande vitesse de rotation, les plots de friction 30 sont maintenus solidairement ensemble grâce aux liaisons tenon-mortaise, ce qui limite la déformation des pales de progressivité 20. Les liaisons tenon-mortaise 50 présentent également l'avantage de créer un sous-ensemble facilitant l'assemblage du dispositif de progressivité 10.

Pour maintenir le sous-ensemble, les clinquants intercalaires 31 sont en appui axial l'un sur l'autre par l'intermédiaire de rivets additionnels 51. Dans le cas présent, deux rivets additionnels 51 sont placés au niveau de chaque liaison tenon-mortaise 50. De cette manière, les plots de friction sont maintenus axialement dans un même plan lorsque le dispositif de progressivité est libéré de tout effort axial de compression. Des crevés 52 sont aménagés dans le voile de support pour laisser passer les rivets additionnels 51 lorsque le dispositif de progressivité est comprimé.

Dans ce quatrième mode de réalisation, les deux plis 24a, 24b de la pale de progressivité 20 s'étendent dans une direction orthoradiale par rapport à l'axe diamétral X du voile de support 11 de telle sorte que, sous contraintes d'appui, les plis s'écrasent de façon isostatique. La direction orthoradiale peut être définie comme étant orthogonale à l'axe de rotation X et, notamment, perpendiculaire au rayon d'implantation des pales 20 sur le voile de support 11.

Les pales de progressivité sont réalisées en tôle d'acier, les plis 24a, 24b étant perpendiculaires au sens de laminage de la tôle. De préférence, les plis d'une même pale sont parallèles entre eux. Les deux plis 24a, 24b forment des cambrages identiques. Les plis sont inclinés avec un angle compris entre 1° et 20° par rapport au plan perpendiculaire à l'axe central X. L'inclinaison des plis assure une élévation comprise entre 0,5 et 1,5 mm et de préférence de 0,9 mm de la zone de support 22 par rapport au voile de support 11.

En conséquence, lors de la phase de ré-embrayage, lorsqu'au moins l'une des faces de frottement se trouve soumise à des contraintes d'appui, celles-ci sont transmises à la zone de support 22 et aux plis 24a, 24b qui se déforment alors de façon contrôlée.

Plus précisément, les deux plis s'écrasent dans le même sens, de manière identique et simultanée sur toutes les pales de progressivité 20, à la manière de charnières, en provoquant un décalage angulaire tangentiel des plots de friction dont les faces de friction restent toutefois dans des plans parallèles, comme illustré par la figure 10.

On va maintenant décrire en référence à la figure 11, un disque d'embrayage à friction 1 intégrant le dispositif de progressivité 10 selon un cinquième mode de mise en œuvre de l'invention dans lequel dans lequel l'extrémité libre 21 de chaque pale de progressivité 20 est retenue au moins partiellement axialement par rapport au voile de support 11 par l'intermédiaire de l'extrémité 26 fixée de la pale de progressivité adjacente lorsque le dispositif de progressivité est libéré de tout effort axial de compression.

Une partie de l'extrémité libre 21 de chaque pale de progressivité est insérée dans un trou de dégagement 60 formé dans le voile de support 11 et recouverte au moins partiellement par l'extrémité 26 fixée de la pale de progressivité adjacente, ce qui contribue à réduire l'encombrement axial du dispositif de progressivité.

La pale de progressivité 20 comprend deux plis de matière 24a, 24b délimitant la zone de support 22 du plot de friction. Le pli 24b de matière situé entre l'extrémité 26 fixée et la zone de support 22 du plot de friction s'étend selon une direction sensiblement radiale, les autres plis 24a de matière de la pale de progressivité étant répartis circonférentiellement au-delà de la zone de support 22 et à l'opposé de l'extrémité 26 fixée. Cette réalisation de pliage est commune à l'ensemble des modes de mise en œuvre présentés sur les figures 1 à 11.

L'invention n'est pas limitée aux exemples de réalisation qui viennent d'être décrit. Ainsi, par exemple, que des pales de progressivité peuvent s'étendre circonférentiellement sur les deux faces du voile de support, les pales de progressivité étant disposées axialement en regard l'une de l'autre, de part et d'autre de la partie externe du voile de support.

## Revendications

1. Dispositif de progressivité (10) pour un disque d'embrayage à friction, comprenant :
un voile de support (11) à axe central de rotation (X) dans lequel une partie centrale (12) annulaire est adaptée à coopérer avec un amortisseur de vibration torsionnelle (100) et une partie externe (13) porte des pales de progressivité (20, 20a) et des plots de friction (30) rapportés sur les pales de progressivité,
dans lequel les pales de progressivité s'étendent circonférentiellement sur au moins une des faces du voile de support,
et dans lequel chaque pale de progressivité (20, 20a) comprend une extrémité (26) fixée sur la partie externe (13), une autre extrémité libre (21) et
des plis (24a, 24b) délimitant une zone de support (22) pour le plot de friction (30), le plot de friction associé à cette pale de progressivité recouvrant l'extrémité (26) fixée sur le voile de support (11),
**caractérisé en ce que** chaque pale de progressivité (20, 20a) comprend au moins deux plis (24a, 24b) de matière délimitant la zone de support (22) du plot de friction (30), le pli (24b) de matière situé entre l'extrémité (26) fixée et la zone de support (22) du plot de friction s'étend selon une direction sensiblement radiale, les autres plis (24a) de matière de la pale de progressivité étant répartis circonférentiellement au-delà de la zone de support et à l'opposé de l'extrémité (26) fixée.

2. Dispositif de progressivité (10) selon la revendication 1, **caractérisé en ce que** la zone de support (22) de chaque pale de progressivité (20, 20a) est décalée axialement par rapport à l'extrémité (26) fixée, l'extrémité (26) fixée de ladite pale de progressivité (20, 20a) étant en appui sur la face du voile de support.

3. Dispositif de progressivité (10) selon la revendication 1 ou 2, **caractérisé en ce que** le voile de support (11) comprend un moyen de retenue (40) passant au travers de l'extrémité libre (21) de chaque pale de progressivité (20a).

4. Dispositif de progressivité (10) selon la revendication précédente, **caractérisé en ce que** l'extrémité libre (21) de chaque pale de progressivité (20a) est retenue axialement par rapport au voile de support (11) par l'intermédiaire du moyen de retenue (40) lorsque le dispositif de progressivité est libéré de tout effort axial de compression.

5. Dispositif de progressivité (10) selon la revendication 3 ou 4, **caractérisé en ce que** le moyen de retenue (40) comprend un rivet (40) à tête épaulée (42) fixé sur le voile de support et introduit dans un orifice (25) aménagé sur l'extrémité libre (21) de chaque pale de progressivité (20a), une partie de l'extrémité libre (21) étant apte à s'appuyer sur la tête épaulée (42) du rivet (40).

6. Dispositif de progressivité (10) selon la revendication 1 ou 2, **caractérisé en ce que** chaque plot de friction (30) est en appui axial avec le plot de friction (30) adjacent circonférentiellement.

7. Dispositif de progressivité (10) selon la revendication précédente, **caractérisé en ce que** chaque plot de friction (30) comprend un clinquant intercalaire (31), le clinquant intercalaire étant en appui axial sur le clinquant intercalaire du plot de friction adjacent lorsque le dispositif de progressivité est libéré de tout effort axial de compression.

8. Dispositif de progressivité (10) selon la revendication précédente, **caractérisé en ce que** le clinquant intercalaire (31) comprend une languette d'appui (34) orientée angulairement en direction de l'extrémité libre (21) de chaque pale de progressivité (20), ladite languette d'appui (34) venant en appui directement sur le clinquant intercalaire (31) du plot de friction (30) adjacent

9. Dispositif de progressivité (10) selon la revendication 6, **caractérisé en ce que** chaque plot de friction (30) comprend un clinquant intercalaire (31), deux clinquants intercalaires adjacents circonférentiellement étant liés entre eux par une liaison tenon-mortaise (50) et en appui axial l'un sur l'autre par l'intermédiaire d'au moins un rivet additionnel (51).

10. Dispositif de progressivité (10) selon la revendication 1 ou 2, **caractérisé en ce que** l'extrémité libre (21) de chaque pale de progressivité (20) est retenue au moins partiellement axialement par rapport au voile de support (11) par l'intermédiaire de l'extrémité (26) fixée de la pale de progressivité adjacente lorsque le dispositif de progressivité est libéré de tout effort axial de compression.

11. Dispositif de progressivité (10) selon la revendication précédente, **caractérisé en ce qu'**une partie de l'extrémité libre (21) de chaque pale de progressivité (20) est insérée dans un trou de dégagement (60) formé dans le voile de support (11) et recouverte au moins partiellement par l'extrémité (26) fixée de la pale de progressivité adjacente.

12. Dispositif de progressivité (10) selon l'une des revendications 1 à 11, **caractérisé en ce que** des plots de friction (30) sont fixés directement sur une des faces du voile de support (11), en vis-à-vis de pales de progressivité (20, 20a) disposées sur l'autre face.

13. Dispositif de progressivité (10) selon l'une des revendications 1 à 11, **caractérisé en ce que** les pales de progressivité (20, 20a) s'étendent circonférentiellement sur les deux faces du voile de support (11), les pales de progressivité étant disposées axialement en regard l'une de l'autre, de part et d'autre de la partie externe (13).

14. Disque d'embrayage à friction (1) pour véhicule automobile, comprenant un voile de transmission de couple (2), deux rondelles de guidage (3) disposées de part et d'autre dudit voile de transmission de couple (2), des ressorts hélicoïdaux de compression (4) en appui sur le voile de transmission de couple et les rondelles de guidage, et un dispositif de progressivité (10) selon l'une quelconque des revendications précédentes, dans lequel le voile de support (11) est porté par le voile de transmission de couple (2) ou par l'une des deux rondelles de guidage (3).

## Patentansprüche

1. Progressivitätsvorrichtung (10) für eine Reibkupplungsscheibe, umfassend:
eine Stützscheibe (11) mit zentraler Drehachse (X),
wobei ein ringförmiger Mittelteil (12) mit einem Torsionsschwingungsdämpfer (100) zusammenwirken kann und
ein Außenteil (13) Progressivitätsschaufeln (20, 20a) und an den Progressivitätsschaufeln angebrachte Reibklötze (30) trägt,
wobei sich die Progressivitätsschaufeln in Umfangsrichtung auf mindestens einer der Seiten der Stützscheibe erstrecken und
wobei jede Progressivitätsschaufel (20, 20a) ein am Außenteil (13) befestigtes Ende (26), ein anderes freies Ende (21) und Falten (24a, 24b), die einen Stützbereich (22) für den Reibklotz (30) begrenzen, umfasst, wobei der dieser Progressivitätsschaufel zugeordnete Reibklotz das an der Stützscheibe (11) befestigte Ende (26) bedeckt,
**dadurch gekennzeichnet, dass** jede Progressivitätsschaufel (20, 20a) mindestens zwei Materialfalten (24a, 24b) umfasst, die den Stützbereich (22) des Reibklotzes (30) begrenzen, wobei sich die Materialfalte (24b), die sich zwischen dem befestigten Ende (26) und dem Stützbereich (22) des Reibklotzes befindet, in einer im Wesentlichen radialen Richtung erstreckt, wobei die anderen Materialfalten (24a) der Progressivitätsschaufel in Umfangsrichtung jenseits des Stützbereichs und gegenüber dem befestigten Ende (26) verteilt sind.

2. Progressivitätsvorrichtung (10) nach Anspruch 1, **dadurch gekennzeichnet, dass** der Stützbereich (22) jeder Progressivitätsschaufel (20, 20a) in Bezug auf das befestigte Ende (26) axial versetzt ist, wobei das befestigte Ende (26) der Progressivitätsschaufel (20, 20a) auf der Fläche der Stützscheibe aufliegt.

3. Progressivitätsvorrichtung (10) nach Anspruch 1 oder 2, **dadurch gekennzeichnet, dass** die Stützscheibe (11) ein Haltemittel (40) umfasst, das durch das freie Ende (21) jeder Progressivitätsschaufel (20a) verläuft.

4. Progressivitätsvorrichtung (10) nach dem vorangehenden Anspruch, **dadurch gekennzeichnet, dass** das freie Ende (21) jeder Progressivitätsschaufel (20a) axial in Bezug auf die Stützscheibe (11) über das Haltemittel (40) gehalten wird, wenn die Progressivitätsvorrichtung von jeder axialen Druckkraft befreit ist.

5. Progressivitätsvorrichtung (10) nach Anspruch 3 oder 4, **dadurch gekennzeichnet, dass** das Haltemittel (40) einen Niet (40) mit gestuftem Kopf (42) umfasst, der an der Stützscheibe befestigt und in eine am freien Ende (21) jeder Progressivitätsschaufel (20a) vorgesehene Öffnung (25) eingeführt ist, wobei ein Teil des freien Endes (21) am gestuften Kopf (42) des Niets (40) anliegen kann.

6. Progressivitätsvorrichtung (10) nach Anspruch 1 oder 2, **dadurch gekennzeichnet, dass** jeder Reibklotz (30) axial an dem in Umfangsrichtung benachbarten Reibklotz (30) anliegt.

7. Progressivitätsvorrichtung (10) nach dem vorangehenden Anspruch, **dadurch gekennzeichnet, dass** jeder Reibklotz (30) eine Zwischenlage (31) umfasst, wobei die Zwischenlage axial an der Zwischenlage des benachbarten Reibklotzes anliegt, wenn die Progressivitätsvorrichtung von jeder axialen Druckkraft befreit ist.

8. Progressivitätsvorrichtung (10) nach dem vorangehenden Anspruch, **dadurch gekennzeichnet, dass** die Zwischenlage (31) eine Stützzunge (34) umfasst, die winkelmäßig in Richtung des freien Endes (21) jeder Progressivitätsschaufel (20) ausgerichtet ist, wobei die Stützzunge (34) direkt an der Zwischenlage (31) des benachbarten Reibklotzes (30) anliegt.

9. Progressivitätsvorrichtung (10) nach Anspruch 6, **dadurch gekennzeichnet, dass** jeder Reibklotz (30) eine Zwischenlage (31) umfasst, wobei zwei in Umfangsrichtung benachbarte Zwischenlagen durch eine Zapfen-Schlitz-Verbindung (50) miteinander verbunden sind und über mindestens einen zusätzlichen Niet (51) axial aneinander anliegen.

10. Progressivitätsvorrichtung (10) nach Anspruch 1 oder 2, **dadurch gekennzeichnet, dass** das freie Ende (21) jeder Progressivitätsschaufel (20) axial in Bezug auf die Stützscheibe (11) zumindest teilweise über das befestigte Ende (26) der benachbarten Progressivitätsschaufel gehalten wird, wenn die Progressivitätsvorrichtung von jeder axialen Druckkraft befreit ist.

11. Progressivitätsvorrichtung (10) nach dem vorangehenden Anspruch, **dadurch gekennzeichnet, dass** ein Teil des freien Endes (21) jeder Progressivitätsschaufel (20) in ein in der Stützscheibe (11) ausgebildetes Durchgangsloch (60) eingesetzt und zumindest teilweise durch das befestigte Ende (26) der benachbarten Progressivitätsschaufel bedeckt ist.

12. Progressivitätsvorrichtung (10) nach einem der Ansprüche 1 bis 11, **dadurch gekennzeichnet, dass** Reibklötze (30) direkt auf einer der Seiten der Stützscheibe (11) gegenüber von Progressivitätsschaufeln (20, 20a), die auf der anderen Seite angeordnet sind, befestigt sind.

13. Progressivitätsvorrichtung (10) nach einem der Ansprüche 1 bis 11, **dadurch gekennzeichnet, dass** sich die Progressivitätsschaufeln (20, 20a) in Umfangsrichtung auf den beiden Seiten der Stützscheibe (11) erstrecken, wobei die Progressivitätsschaufeln axial einander gegenüberliegend beiderseits des Außenteils (13) angeordnet sind.

14. Reibkupplungsscheibe (1) für ein Kraftfahrzeug, umfassend eine Drehmomentübertragungsscheibe (2), zwei Führungsscheiben (3), die beiderseits der Drehmomentübertragungsscheibe (2) angeordnet sind, Druckschraubenfedern (4), die an der Drehmomentübertragungsscheibe und den Führungsscheiben anliegen, und eine Progressivitätsvorrichtung (10) nach einem der vorangehenden Ansprüche, wobei die Stützscheibe (11) von der Drehmomentübertragungsscheibe (2) oder von einer der beiden Führungsscheiben (3) getragen wird.

## Claims

1. Progressivity device (10) for a friction clutch disc, comprising:
a support flange (11), having a central axis of rotation (X), in which an annular central part (12) is designed to cooperate with a torsional vibration damper (100), and an external part (13) carries progressivity blades (20, 20a) and friction pads (30) attached to the progressivity blades,
wherein the progressivity blades extend circumferentially over at least one of the faces of the support flange,
and wherein each progressivity blade (20, 20a) comprises one end (26) fixed to the external part (13), another free end (21) and folds (24a, 24b) delimiting a support region (22) for the friction pad (30), the friction pad associated with this progressivity blade covering the end (26) fixed to the support flange (11),
**characterized in that** each progressivity blade (20, 20a) comprises at least two material folds (24a, 24b) delimiting the support region (22) for the friction pad (30), the material fold (24b) situated between the fixed end (26) and the support region (22) for the friction pad extending along a substantially radial direction, the other material folds (24a) of the progressivity blade being distributed circumferentially beyond the support region and away from the fixed end (26).

2. Progressivity device (10) according to Claim 1, **characterized in that** the support region (22) of each progressivity blade (20, 20a) is offset axially with respect to the fixed end (26), the fixed end (26) of said progressivity blade (20, 20a) bearing on the face of the support flange.

3. Progressivity device (10) according to Claim 1 or 2, **characterized in that** the support flange (11) comprises a retaining means (40) passing through the free end (21) of each progressivity blade (20a).

4. Progressivity device (10) according to the preceding claim, **characterized in that** the free end (21) of each progressivity blade (20a) is retained axially with respect to the support flange (11) by way of the retaining means (40) when the progressivity device is freed from all axial compression force.

5. Progressivity device (10) according to Claim 3 or 4, **characterized in that** the retaining means (40) comprises a rivet (40), having a shouldered head (42), fixed to the support flange and introduced into an orifice (25) formed in the free end (21) of each progressivity blade (20a), part of the free end (21) being able to bear on the shouldered head (42) of the rivet (40).

6. Progressivity device (10) according to Claim 1 or 2, **characterized in that** each friction pad (30) bears axially against the circumferentially adjacent friction pad (30).

7. Progressivity device (10) according to the preceding claim, **characterized in that** each friction pad (30) comprises an intercalary foil (31), the intercalary foil bearing axially on the intercalary foil of the adjacent friction pad when the progressivity device is freed from all axial compression force.

8. Progressivity device (10) according to the preceding claim, **characterized in that** the intercalary foil (31) comprises a bearing tongue (34) oriented angularly in the direction of the free end (21) of each progressivity blade (20), said bearing tongue (34) bearing directly on the intercalary foil (31) of the adjacent friction pad (30).

9. Progressivity device (10) according to Claim 6, **characterized in that** each friction pad (30) comprises an intercalary foil (31), two circumferentially adjacent intercalary foils being connected to one another by a mortise and tenon connection (50) and bearing axially on one another by way of at least one additional rivet (51).

10. Progressivity device (10) according to Claim 1 or 2, **characterized in that** the free end (21) of each progressivity blade (20) is retained at least partially axially with respect to the support flange (11) by way of the fixed end (26) of the adjacent progressivity blade when the progressivity device is freed from all axial compression force.

11. Progressivity device (10) according to the preceding claim, **characterized in that** part of the free end (21) of each progressivity blade (20) is inserted into a disengagement hole (60) formed in the support flange (11) and covered at least partially by the fixed end (26) of the adjacent progressivity blade.

12. Progressivity device (10) according to one of Claims 1 to 11, **characterized in that** friction pads (30) are fixed directly to one of the faces of the support flange (11), opposite progressivity blades (20, 20a) arranged on the other face.

13. Progressivity device (10) according to one of Claims 1 to 11, **characterized in that** the progressivity blades (20, 20a) extend circumferentially over the two faces of the support flange (11), the progressivity blades being arranged axially facing one another, on either side of the external part (13).

14. Friction clutch disc (1) for a motor vehicle, comprising a torque transmission flange (2), two guide washers (3) arranged on either side of said torque transmission flange (2), helical compression springs (4) bearing on the torque transmission flange and the guide washers, and a progressivity device (10) according to any one of the preceding claims, wherein the support flange (11) is borne by the torque transmission flange (2) or by one of the two guide washers (3).
